# EUROPEAN PATENT SPECIFICATION

(11) **EP 0 826 304 B1**
(45) Date of publication and mention of the grant of the patent: **14.03.2001**
(21) Application number: 97306796.0
(22) Date of filing: 02.09.1997
(51) Int. Cl.: A21C 3/02

(54) **Apparatus for powdering bread dough being stretched**
Vorrichtung zur Bestäuben von Brotteig während des Streckens
Appareil pour saupoudrer la pâte à pain pendant l'étirage

(30) Priority: 02.09.1996 JP 25096996
(43) Date of publication of application: 04.03.1998
(73) Proprietor: RHEON AUTOMATIC MACHINERY CO. LTD., Utsunomiya-shi Tochigi-ken (JP)
(72) Inventor: Morikawa, Michio, c/o Rheon Autom. Mach. Co., Ltd., Utsunomiya-shi, Tochigi-ken (JP)
(74) Representative: Leale, Robin George

(56) References cited:
- EP-A- 0 239 154
- EP-A- 0 410 818
- CH-A- 506 949
- FR-A- 1 242 242

## Description

This invention relates to apparatus for supplying powder to bread dough in a stretching apparatus, so as to prevent the bread dough from adhering to the apparatus during the stretching process.

Disclosed in Japanese Patent Publication No. 54-991 is powder supply means for a dough stretching apparatus, comprising a conveying device having a plurality of belt conveyors arranged in series with the leading end of one of two adjacent conveyors located above the trailing end of the other conveyor so that powder is delivered from one conveyor to the other.

However, when the belt conveyors of such a device are replaced by a plurality of rollers to stretch the bread dough, sufficient powder cannot be delivered to the rollers, and consequently the bread dough being stretched adheres to the rollers, and the stretching operation sometimes needs to be stopped. Thus, conventional stretching apparatus using rollers can often cause problems when being used for a continuous operation.

According to the present invention there is provided apparatus for stretching bread dough, comprising a conveying device having a first plurality of rollers, a second roller mechanism disposed above the first plurality of rollers, a powder supply source, and a supply conveyor and a discharge conveyor positioned at the inlet and outlet of the conveying device respectively, characterized by a powder supply conveyor belt which engages the lower surfaces of the said first plurality of rollers, for receiving powder from the said powder supply source and supplying the powder to the bread dough being stretched.

Some embodiments of the invention will now be described by way of example and with reference to the accompanying drawings, in which:-
Fig. 1 is a side view of a first embodiment of this invention;
Fig. 2 is a sectional front view of the first embodiment;
Fig. 3 is a sectional front view of a second embodiment;
Fig. 4 is a side view of a third embodiment; and
Fig. 5 is a side view of a fourth embodiment.

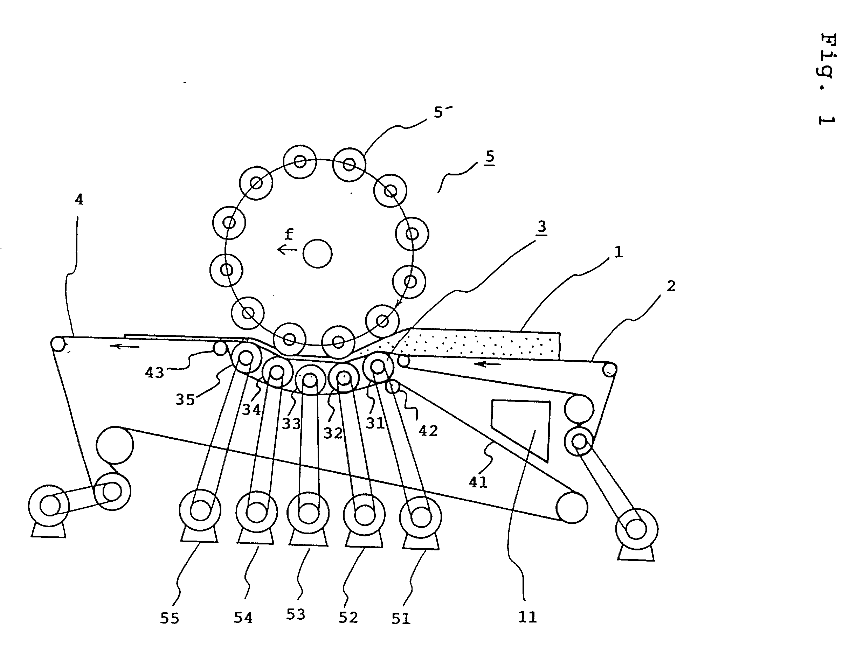

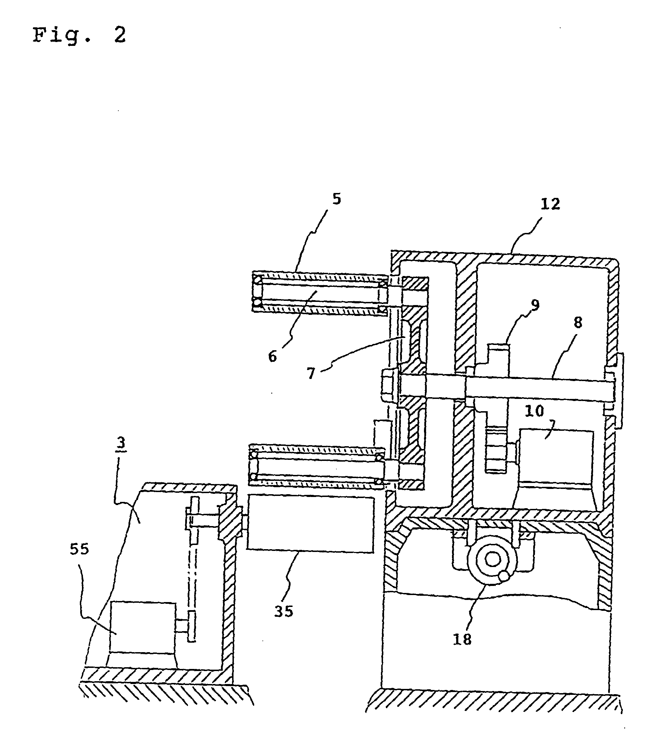

Referring to Figs. 1 and 2, a supply conveyor 2 for supplying bread dough 1 is disposed at the inlet of a conveying device 3 comprising a plurality of conveying rollers 31 to 35, and a discharge conveyor 4 is disposed at the outlet of the conveying device 3.

A roller mechanism 5, wherein a plurality of planetary rollers 5' revolve along a circular orbit, is disposed above the conveying device 3. The planetary rollers 5' are freely rotatable on shafts 6 fixed to a wheel 7, and are arranged to revolve substantially parallel to the conveying device where they face the same.

The wheel 7 is fixed to a drive shaft 8 supported by a frame 12, and is rotated by a motor 10 via a gear 9 mounted on the drive shaft 8.

A powder supply conveyor belt 41 is a part of the conveyor belt of the discharge conveyor 4 and extends in the upstream direction below and beyond the conveying device 3, while its upper surface abuts the lower surfaces of the conveying rollers 31 to 35. The powder supply conveyor belt 41 is supported by rollers 42 and 43 of the discharge conveyor 4 adjacent to the conveying rollers 31 to 35 so as to cause the conveyor belt 41 to press the conveying rollers upwards.

Powder supply means 11 is provided at an upstream end of the discharge conveyor 4 and is arranged to sprinkle powder onto the conveyor belt 4. Any conventional powder supply means 11 may be used that achieves this purpose.

The conveying device 3 may be disposed such that the distance or space between an imaginary circular arc as defined by the envelope of the planetary rollers 5' and that of the conveying rollers 31 to 35, decreases as bread dough moves from the upstream roller 31 to the downstream roller 35.

The conveying rollers 31 to 35 are driven by respective motors 51 to 55 through drive belts so as to rotate in the downstream direction. The rate of rotation of each of the motors 51 to 55 can be adjusted separately by a controller (not shown) such as an inverter, so that the rotational speeds of the respective rollers 31 to 35 can be adjusted to increase in the downstream direction, whereby bread dough is stretched in accordance with the properties of the dough.

The rate of increase of the rotational speeds of the rollers 31 to 35 is made to be inversely proportional to that of the decrease in the space between them and the planetary rollers 5'. The rate of decrease of that space, namely the compression ratio, can be increased by rotating a handle 18 in the direction shown by the arrow f.

The speed of the supply conveyor 2 is set to be the same as or less than that of the first conveying roller 31, and the speed of the discharge conveyor 4 is set to be the same as or greater than that of the last conveying roller 35.

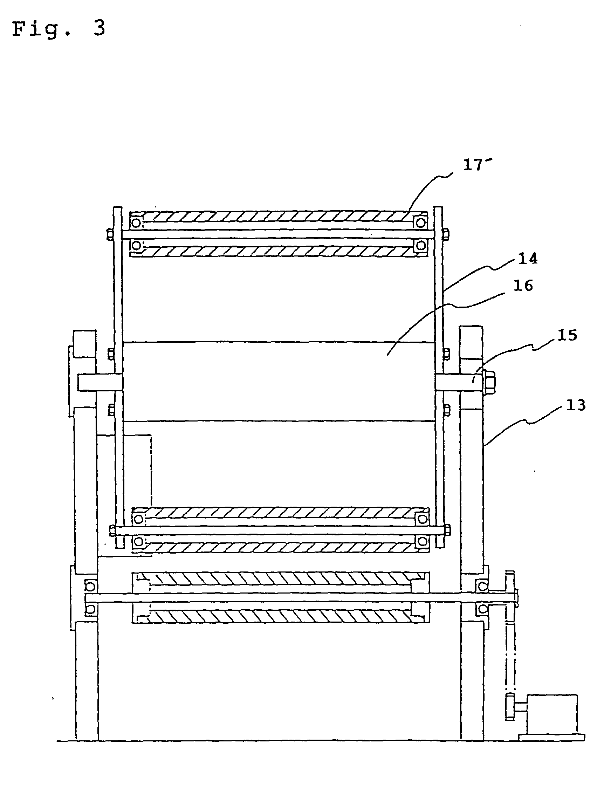

In a second embodiment shown in Fig. 3, each of the planetary rollers 17' is supported at both its ends, as compared with the structure of Fig. 2 in which the rollers 5' are cantilevered. A rotary wheel 14 is supported by a frame 13, a motor pully 16 is mounted on a main shaft 15 of the wheel 14, and the planetary rollers 17' are caused to rotate by the rotational drive of the motor pulley 16.

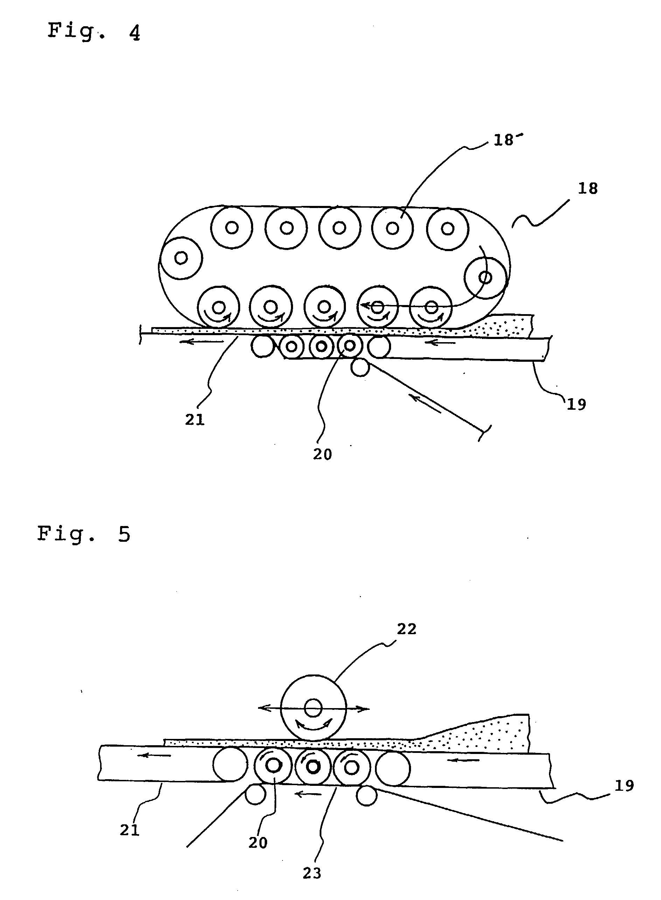

In a third embodiment shown in Fig. 4, a roller mechanism 18 has an oval orbit around which planetary rollers 18' travel. Bread dough is stretched as it passes through a space defined between a lower linear portion of the oval orbit, a supply conveyor 19, conveying rollers 20, and discharge conveyor 21. Powder is sprinkled by a powder supply device (not shown) onto the discharge conveyor 21 at a position upstream of the rollers 20 and adheres to the rollers 20 because the upper surface of the conveyor 21 abuts the lower surfaces of the rollers 20.

In a fourth embodiment shown in Fig. 5, a stretching roller 22, which reciprocates above a supply conveyor 19, conveying rollers 20, and discharge conveyor 21, take the place of the planetary rollers in the stretching apparatus of the previous embodiments. A separate powder supply conveyor belt 23 is provided independently of the discharge conveyor 21.

The operation and effect of the above described embodiments of the invention will now be described.

Bread dough 1, conveyed by the supply conveyor 2, is supplied to the conveying device 3. The supplied bread dough 1 is sandwiched between the rollers 5' (18',22) and the conveying device 3, is stretched by the conveying rollers whose rotational speeds increase sequentially, and is discharged by the discharge conveyor 4.

Powder is supplied from the powder supply means 11 onto the discharge conveyor 4 (21) or the separate powder supply conveyor 23, so that the supplied powder securely adheres to the lower surfaces of the conveying rollers 31 to 35 (20), which abut the extended portion 41 (21) of the discharge conveyor belt 4 (21) or the powder supply conveyor belt 23. The powder thus adhering to the conveying rollers 31 to 35 (20) is then transferred to the bread dough passing thereon so that a stretching operation free from adhesion is achieved.

If powder is not supplied to the conveying rollers 31 to 35 (20), those rollers cannot convey powder even if some powder is made to adhere to the lower surface of the bread dough by sprinkling powder onto the supply conveyor 2 (19). Then, when the bread dough is being stretched on the conveying rollers 31 to 35 (20), newly exposed areas of the bread dough without any powder appear on its surface, and these areas can adhere to the surface of the conveying rollers. A considerable amount of powder has previously been supplied in an effort to avoid such adhesion, causing a deterioration of the quality of stretched dough products. On the other hand, since the present apparatus directly supplies powder to the conveying rollers 31 to 35 (20), there is no need to supply an excessive amount of powder, so that the total amount of powder used can be reduced.

Since the powder supply conveying belt always contacts the conveying rollers 31 to 35 (20), any dust which adheres to the conveying rollers can be removed by the belt so as to keep their surfaces clean, and so as to prevent the dough from adhering to the rollers.

Since in the present apparatus powder can be supplied uniformly to the conveying rollers, the stretching operation will not have to be stopped because of adhesion of stretched bread dough to the rollers, so that long, continuous operation can be achieved.

## Claims

1. Apparatus for stretching bread dough, comprising a conveying device having a first plurality of rollers (31-35), a second roller mechanism (5) disposed above the first plurality of rollers, a powder supply source (11), and a supply conveyor (2) and a discharge conveyor (4) positioned at the inlet and outlet of the conveying device respectively, characterized by a powder supply conveyor belt (41) which engages the lower surfaces of the said first plurality of rollers, for receiving powder from the said powder supply source and supplying the powder to the bread dough (1) being stretched.

2. Apparatus as claimed in claim 1, wherein the said second roller mechanism (18) has an oval orbit along which planetary rollers (18') travel.

3. Apparatus as claimed in claim 1 or 2, wherein the said second roller mechanism is a stretching roller (22) which reciprocates over the said conveying device.

4. Apparatus as claimed in any preceding claim, wherein the said powder supply conveyor belt (41) forms a part of the said discharge conveyor (4).

## Patentansprüche

1. Vorrichtung zum Strecken von Brotteig, aufweisend eine Fördereinrichtung mit einer ersten Vielzahl von Walzen (31-35), einem zweiten Walzenmechanismus (5), der oberhalb der ersten Vielzahl von Walzen angeordnet ist, einer Pulverzuführquelle (11), und einem Zuführförderer (2) und einem Ausgabeförderer (4), positioniert an dem Einlaß bzw. Auslaß der Fördereinrichtung, gekennzeichnet durch ein Pulverzuführförderband (41), welches mit den unteren Oberflächen der ersten Vielzahl von Walzen in Eingriff ist, um Pulver von der Pulverzuführquelle zu erhalten und das Pulver dem Brotteig (1), der gerade gestreckt wird, zuzuführen.

2. Vorrichtung nach Anspruch 1, wobei der zweite Walzenmechanismus (18) eine ovale Umlaufbahn aufweist, entlang welcher sich die Planetenwalzen (18') bewegen.

3. Vorrichtung nach Anspruch 1 oder 2, wobei der zweite Walzenmechanismus eine Streckwalze (22) ist, welche sich über der Fördereinrichtung hin- und herbewegt.

4. Vorrichtung nach einem der vorhergehenden Ansprüche, wobei das Pulverzuführförderband (41) einen Teil des Abgabeförderers (4) bildet.

## Revendications

1. Appareil pour étirer de la pâte à pain, comportant un dispositif de transport ayant une première pluralité de rouleaux (31-35), un second mécanisme (5) à rouleaux disposé au-dessus de la première pluralité de rouleaux, une source (11) d'alimentation en poudre, et un transporteur d'amenée (2) et un transporteur de déchargement (4) positionnés, respectivement, à l'entrée et à la sortie du dispositif de transport, caractérisé par une bande transporteuse (41) d'amenée de poudre qui entre en contact avec les surfaces inférieures de ladite première pluralité de rouleaux, pour recevoir de la poudre provenant de ladite source d'alimentation en poudre et amener la poudre à la pâte à pain (1) pendant qu'elle est étirée.

2. Appareil selon la revendication 1, dans lequel ledit second mécanisme (18) à rouleaux présente une orbite ovale le long de laquelle des rouleaux planétaires (18') se déplacent.

3. Appareil selon la revendication 1 ou 2, dans lequel ledit second mécanisme à rouleau est un rouleau d'étirage (22) qui exécute un mouvement alternatif au-dessus dudit dispositif de transport.

4. Appareil selon l'une quelconque des revendications précédentes, dans lequel ladite bande transporteuse (41) d'amenée de poudre forme une partie dudit transporteur de déchargement (4).
